# EUROPÄISCHE PATENTSCHRIFT

(11) **EP 0 891 825 B1**
(45) Veröffentlichungstag und Bekanntmachung des Hinweises auf die Patenterteilung: **10.09.2003**
(21) Anmeldenummer: 98103063.8
(22) Anmeldetag: 21.02.1998
(51) Int. Cl.: B21K 1/76, B21H 7/18

(54) **Verfahren zur Bearbeitung von Zapfen an Tripoden**
Method for processing the journals of tripod universal joints
Procédé de traitement des tourillons de joints de cardan en tripode

(30) Priorität: 27.03.1997 DE 19712985
(43) Veröffentlichungstag der Anmeldung: 20.01.1999
(73) Patentinhaber: ThyssenKrupp Automotive AG, 44793 Bochum (DE)
(72) Erfinder: Jakob, Konrad, 6824 Schlins (AT); Meyer, Jürgen, 6824 Schlins (AT)

(56) Entgegenhaltungen:
- DE-A- 2 261 154
- DE-A- 4 240 131
- DE-C- 19 515 213

## Beschreibung

Die Erfindung betrifft ein Verfahren gemäß dem Oberbegriff des Anspruchs 1 bzw. 2.

Es ist bekannt, Werkstücke wie Tripoden, Gelenkkreuze, Gelenkinnenteile, vgl. DE 42 40 131 C2, durch spanloses Fließpressen herzustellen. Im Anschluß daran erfolgt im allgemeinen eine spanende Fertigbearbeitung der Zapfenoberfläche. Diese Werkstücke werden zur lagesicheren Verbindung mit zugeordneten Elementen mit Ringnuten versehen, in die Sicherungsringe eingesetzt werden, um die zu verbindenden Werkstücke und Elemente gegeneinander zu fixieren.

Die DE 42 40 131 C2 zeigt z.B. die Verbindung eines Gelenkinnenteils mit einer Antriebswelle, wobei das Ende der Antriebswelle eine derartige Nut aufweist, in die nach Einstecken der Antriebswelle in das Gelenkinnenteil ein Sicherungsring eingelegt wird, der dann Antriebswelle und Gelenkinnenteil gegeneinander fixiert.

Auch ist es z.B. bekannt, die Enden von Zapfen an Tripoden mit ringförmigen Nuten zu versehen, in die nach dem Aufschieben z.B. von Nadellagern auf die Zapfen ebenfalls jeweils ein Sicherungsring eingelegt wird, der das Nadellager auf dem Zapfen sicher fixiert.

Diese Nuten werden in allen Fällen nach dem Ausformen des Werkstückes in einem zusätzlichen separaten und aufwendigen Arbeitsgang in konventioneller Weise durch spanende Formgebung wie Drehen, Fräsen oder Schleifen hergestellt.

Um zumindest das aufwendige Herstellen der Nut am Ende des Zapfens in einem separaten Arbeitsgang wie Drehen, Fräsen oder Schleifen zu vermeiden, ist bereits durch die DE 195 15 213 C1 vorgeschlagen worden, diese Nut am freien Ende des Zapfens beim Fließpressen des kompletten Werkstücks mit anzuformen.

Die etwa erforderliche Nut am Übergang zwischen Zapfen und Mittelkörper dient als Freistich für den abschließenden Schleif- oder Hartbearbeitungsprozeß.

Hiervon ausgehend, liegt der Erfindung die Aufgabe zugrunde, Verfahren der eingangs genannten Art so zu ergänzen und zu verbessern, daß die Bearbeitung von Zapfen an diesen Werkstücken hinsichtlich der Nuten auch am Übergang vom Zapfen in den Mittelkörper vereinfacht und die Sicherheit der mittels der Sicherungsringe hergestellten Verbindung von Werkstück und korrespondierendem Element davon unberührt bleibt, wobei im gleichen oder separaten Arbeitsgang auch eine abschließende Bearbeitung der Zapfenoberfläche auf einfache Weise ermöglicht wird.

Nach der Erfindung wird die Aufgabe in Verbindung mit den Oberbegriffsmerkmalen durch die in den kennzeichnenden Teilen der Ansprüche 1 und 2 angegebenen Merkmale gelöst.

Dabei sind zur Herstellung der Nuten drei Anwendungsfälle möglich, nämlich
- Anrollen einer Nut am Übergang vom Zapfen in den Mittelkörper,
- Anrollen zweier Nuten am Übergang vom Zapfen in den Mittelkörper und am Zapfenende sowie
- Anrollen zweier Nuten am Übergang vom Zapfen in den Mittelkörper und am Zapfenende, wobei diese Nut am Zapfenende bereits durch Kaltumformung fließgepreßt und damit vorgeformt wurde.

Durch die Maßnahmen gemäß der Ansprüche 2 und 3 wird auf einfache Weise auch die konventionelle Bearbeitung der Oberfläche der Zapfen durch Drehen, Schleifen oder Fräsen auf Endmaß vermieden und damit vereinfacht.

Die Vorteile der erfindungsgemäßen Verfahren bestehen insbesondere auch darin, daß ein Werkstück der genannten Art mit Zapfen mit Nuten in einem einzigen Arbeitsgang in Endmaßform hergestellt werden kann, wobei die Nut jeweils am Ende des Zapfens, die bereits beim Fließpressen des Werkstücks mit angeformt worden ist, durch das Rollen optimiert wird.

Nachfolgend wird die Erfindung anhand von in der Zeichnung schematisch dargestellten Ausführungsbeispielen näher erläutert.

Es zeigt:
Fig. 1 eine Tripode in Draufsicht
Fig. 2 einen Teil des Tripodezapfens in Verbindung mit einem Nadellager,
Fig. 3 einen Teil des Tripodezapfens vor der Bearbeitung mit Werkzeug,
Fig. 4 einen Teil eines anderen Tripodezapfens vor der Bearbeitung mit Werkzeug,
Fig. 5 einen Teil eines Tripodezapfens mit Werkzeug in vollem Eingriff,
Fig. 6 einen Teil eines anderen Tripodezapfens vor der Bearbeitung mit Werkzeug,
Fig. 7 einen Teil des Tripodezapfens nach Fig. 6 mit Werkzeug in vollem Eingriff.

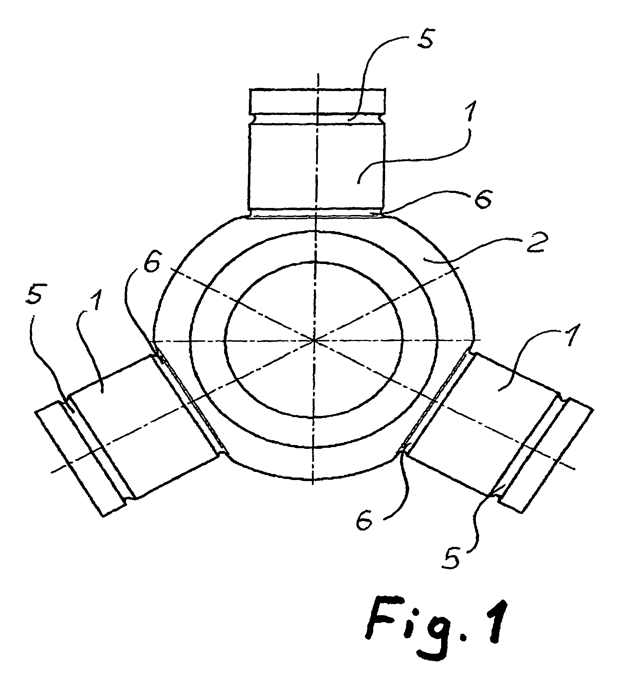

Die Fig. 1 zeigt eine komplett bearbeitete Tripode 2, wobei die drei Zapfen 1 der Tripode 2 jeweils Nuten 5 am Ende der Zapfen und Nuten 6 am Übergang vom Zapfen 1 in den Mittelkörper der Tripode 2 aufweisen.

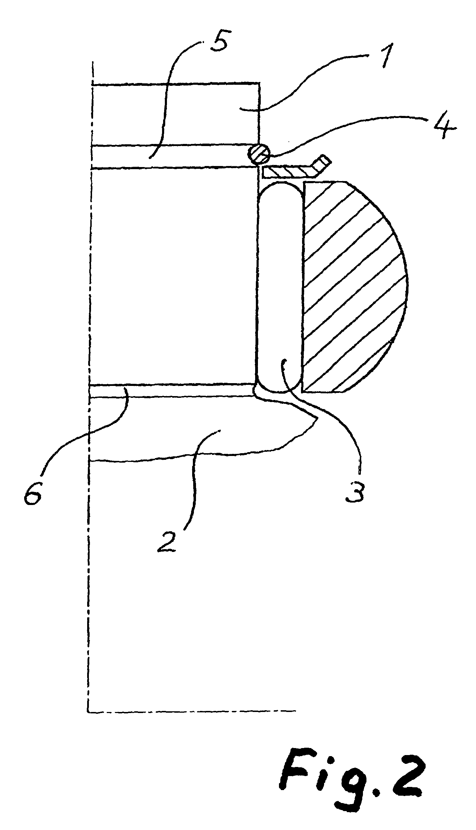

Wie aus der Fig. 2 hervorgeht, ist auf einem Zapfen 1 der Tripode 2 ein Nadellager 3 montiert, das mittels eines Sicherungsringes 4, der in der Nut 5 am Ende des Zapfens 1 eingelegt ist, auf dem Zapfen 1 der Tripode 2 gesichert wird. Die Nut 6 ist zur Freistellung des Schleifprozesses oder des Hartbearbeitungsprozesses des Zapfens 1 erforderlich.

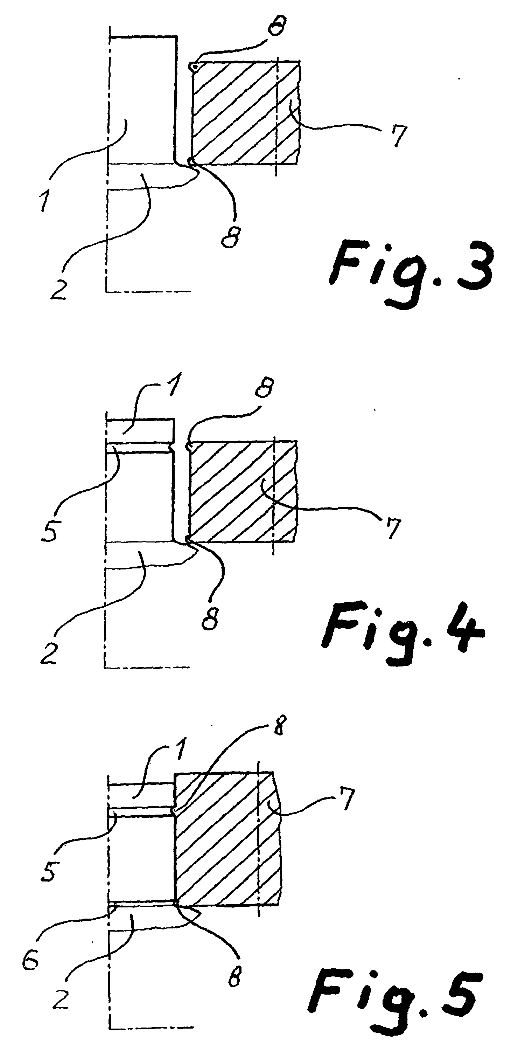

Die Fig. 3 zeigt einen Teil des Zapfens 1 der Tripode 2 mit zugeordneter Rolle 7 mit zwei aufgebrachten Ringwülsten 8, die den Konturen der gewünschten Nuten 5, 6 entsprechen, vor der Bearbeitung.

In der Fig. 4 ist ein Teil eines Zapfens 1 einer Tripode 2 vor der Bearbeitung mittels der Rolle 7 mit den Ringwülsten 8 dargestellt, bei dem die Nut 5 bereits beim Herstellen der Tripode 2 durch Fließpressen mitangeformt worden ist.

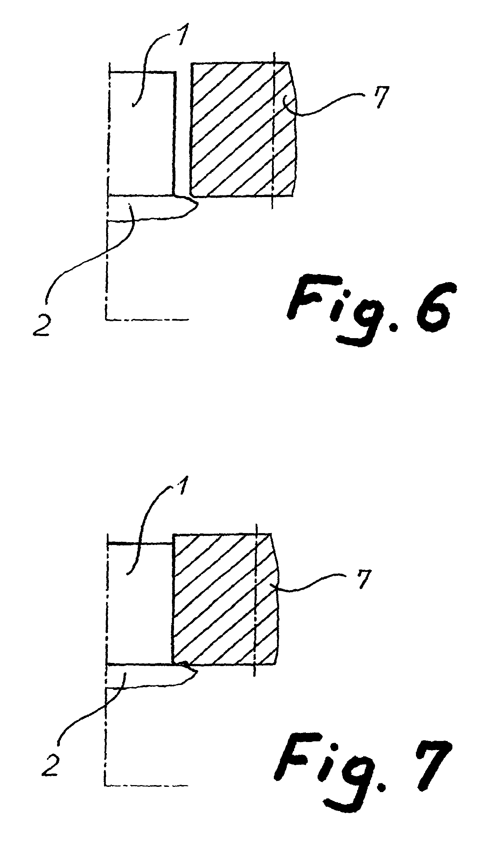

Schließlich zeigt die Fig. 5 einen Teil des Zapfens 1 der Tripode 2 in der Bearbeitungsphase, wobei die Ringwülste 8 der Rolle 7 voll in die Nuten 5, 6 eingreifen und diese in der gewünschten Form und Qualität herstellen, wobei gleichzeitig die Oberfläche des Zapfens 1 mittels der Rolle 7 auf Endmaß kalibriert wird.

In der Fig. 6 ist ein Zapfen 1 einer Tripode 2 mit zugeordneter Rolle 7 vor der Bearbeitung dargestellt, wobei mittels der Rolle 7 nur die Oberfläche des Zapfens 1 kalibriert werden soll.

Die Fig. 7 zeigt dann diesen Kalibriervorgang in der Bearbeitungsphase, wobei mittels der Rolle 7 die Oberfläche des Zapfens 1 der Tripode 2 in Endmaßform und - qualität hergestellt wird.

Diese erfindungsgemäßen Verfahren beinhalten selbstverständlich auch die Bearbeitung von Zapfen mit z.B. elliptischer Querschnittsform.

## Patentansprüche

1. Verfahren zur Bearbeitung von Zapfen (1) an Werkstücken wie Tripoden (2), Gelenkkreuzen und Gelenkinnenteilen, wobei die Werkstücke zunächst durch Fließpressen hergestellt werden und die Zapfen (1) im fertigen Zustand am freien Ende und am Übergang vom Zapfen in den Mittelkörper ringförmige Nuten (5, 6) aufweisen, **dadurch gekennzeichnet, daß** die Nuten (5, 6) an den Zapfen (1) durch Kaltumformung mittels Rollen (7) nach der Herstellung des Werkstückes durch Fließpressen eingebracht werden.

2. Verfahren zur Bearbeitung von Zapfen (1) an Werkstücken wie Tripoden (2), Gelenkkreuzen und Gelenkinnenteilen, wobei die Werkstücke zunächst durch Fließpressen hergestellt werden, **dadurch gekennzeichnet, daß** die Oberflächen der Zapfen mittels Rollen (7) nach der Herstellung des Werkstückes durch Fließpressen kalibriert warden.

3. Verfahren nach den Ansprüchen 1 und 2, **dadurch gekennzeichnet, daß** das Einbringen der Nuten (5, 6) mittels Rollen (7) gleichzeitig mit der Kalibrierung der Oberflächen der Zapfen (1) mittels Rollen (7) in einem Arbeitsgang durchgeführt wird.

4. Verfahren nach Anspruch 1, **dadurch gekennzeichnet, daß** allein die Nut (6) am Übergang vom Zapfen (1) in den Mittelkörper mittels Rollen (7) nach der Herstellung des Werkstückes durch Fließpressen eingebracht wird, wobei die Nut (5) am Ende des Zapfens (1) vorher beim Herstellen des Werkstücks mittels Fließpressen mit angeformt worden ist und mittels Rollen (7) nachgeformt wird

## Claims

1. Method for processing journals (1) on work pieces such as tripods (2), universal joints and the inner parts of hinges, wherein the work pieces are first produced by extrusion and the journals (1) in the finished state have annular grooves (5,6) at the free end and at the transition from the journal into the middle body, **characterised in that** the grooves (5, 6) on the journals (1) are introduced by cold forming by means of rollers (7) after the workpiece has been produced by extrusion.

2. Method for processing journals (1) on work pieces such as tripods (2), universal joints and the inner parts of hinges, wherein the work pieces are first produced by extrusion, **characterised in that** the surfaces of the journals are calibrated by means of rollers (7) after the workpiece has been produced by extrusion.

3. Method as claimed in claims 1 and 2, **characterised in that** the introduction of the grooves (5, 6) by means of rollers (7) is carried out in one working process simultaneously with the calibration of the surfaces of the journals (1) by means of rollers (7).

4. Method as claimed in claim 1, **characterised in that** only the groove (6) at the transition from the journal (1) into the middle body is introduced by means of rollers (7) after the workpiece has been produced by extrusion, wherein the groove (5) at the end of the journal (1) has been previously formed simultaneously with the production of the work piece by extrusion and is post-formed by means of rollers (7)

## Revendications

1. Procédé d'usinage de tourillons (1) sur des pièces telles que des joints de cardan en tripode (2), des joints universels et des pièces internes de joints articulés, dans lequel les pièces sont d'abord fabriquées par extrusion, et les tourillons (1) présentent à l'état terminé des rainures annulaires (5, 6) à l'extrémité libre et à la transition du tourillon au corps central, **caractérisé en ce que** les rainures (5, 6) sont réalisées sur le tourillon (1) par formage à froid au moyen de galets (7), après fabrication de la pièce par extrusion.

2. Procédé de traitement de tourillons (1) sur des pièces telles que des joints de cardan en tripode (2), des joints universels et des pièces internes de joints articulés, dans lequel les pièces sont d'abord fabriquées par extrusion, **caractérisé en ce que** les surfaces des tourillons sont calibrées au moyen de galets (7) après la fabrication de la pièce par extrusion.

3. Procédé selon les revendications 1 et 2, **caractérisé en ce que** la réalisation des rainures (5, 6) au moyen de galets (7) est effectuée en une seule opération en même temps que le calibrage des surfaces des tourillons (1) au moyen de galets (7).

4. Procédé selon la revendication 1, **caractérisé en ce que** seule la rainure (6) à la transition du tourillon (1) au corps central est réalisée au moyen de galets (7) après la fabrication de la pièce par extrusion, la rainure (5) à l'extrémité du tourillon (1) étant ébauchée au préalable lors de la fabrication de la pièce par extrusion, et étant ensuite post-formée au moyen de galets (7).
